# EUROPÄISCHE PATENTSCHRIFT

(11) **EP 2 911 024 B1**
(45) Veröffentlichungstag und Bekanntmachung des Hinweises auf die Patenterteilung: **03.05.2017**
(21) Anmeldenummer: 14156189.4
(22) Anmeldetag: 21.02.2014
(51) Int. Cl.: G05B 19/418

(54) **Verfahren zur Inbetriebnahme eines industriellen Automatisierungsnetzwerks**
Method for commissioning an industrial automation network
Procédé de mise en service d'un réseau d'automatisation industriel

(43) Veröffentlichungstag der Anmeldung: 26.08.2015
(73) Patentinhaber: Siemens Aktiengesellschaft, 80333 München (DE)
(72) Erfinder: Lutz, Benjamin, Dr., 76327 Pfinztal (DE); Rachut, Holger, 14473 Potsdam (DE); Runde, Stefan, Dr., 75045 Walzbachtal (DE); Wolf, Gerrit, 76187 Karlsruhe (DE)

(56) Entgegenhaltungen:
- WO-A1-2004/042482
- US-A1- 2013 006 399
- RUNDE STEFAN ET AL: "EDDL and semantic web - From field device integration (FDI) to Future Device Management (", 2013 IEEE 18TH CONFERENCE ON EMERGING TECHNOLOGIES & FACTORY AUTOMATION (ETFA), IEEE, 10. September 2013 (2013-09-10), Seiten 1-8, XP032516963, ISSN: 1946-0740, DOI: 10.1109/ETFA.2013.6647962 [gefunden am 2013-10-24]
- "Mit PACTware effizient konfigurieren", , 1. November 2009 (2009-11-01), XP055179588, Gefunden im Internet: URL:http://industrial.softing.com/uploads/ softing_downloads/PACTware.pdf [gefunden am 2015-03-26]
- "FDI - Field Device Integration Technology", , 23. Januar 2012 (2012-01-23), XP055179590, Gefunden im Internet: URL:http://www.automation.com/pdf_articles /FDIWhitePaper.pdf [gefunden am 2015-03-26]

## Beschreibung

Die Erfindung betrifft ein Verfahren zur Inbetriebnahme eines industriellen Automatisierungsnetzwerks mit mehreren Feldgeräten, die durch ein Netzwerk zur Datenkomnunikation miteinander verbunden sind, wobei durch ein Software-Werkzeug eine Konfiguration und Parametrierung der im Automatisierungsnetzwerk befindlichen Feldgeräte durchgeführt wird, gemäß dem Oberbegriff des Anspruchs 1.

Im Rahmen eines Lebenszyklus einer industriellen Anlage kommt der Inbetriebnahmephase der automatisierungstechnischen Ausrüstung der Anlage besondere Bedeutung zu. Der bei der Inbetriebnahme herrschende Zeit- und Kostendruck ist immens hoch, da rasch mit der eigentlichen Betriebsphase, in welcher die Produktion auf der Anlage läuft und die jeweilige Anlage Gewinne erwirtschaftet, begonnen werden soll. In der Phase der Inbetriebnahme werden die zuvor in der Engineeringphase ausgewählten und im Anlagenplan platzierten Komponenten der automatisierungstechnischen Ausrüstung, beispielsweise speicherprogrammierbare Steuerungen, sogenannte Controller, Ein-/Ausgabegeräte, sogenannte Remote IOs, Messumformer, z. B. für Durchfluss-, Temperatur-, Füllstands- oder Druckmessung, sowie Stellglieder, z. B. Regelventile und Motoren, die in der vorliegenden Anmeldung allgemein als Feldgeräte bezeichnet werden, in Betrieb genommen. Die Feldgeräte werden durch ein Netzwerk zur Datenkommunikation verbunden, wobei häufig Feldbusse zum Einsatz kommen, die beispielsweise nach den Protokollen PROFIBUS, HART (Highway Addressable Remote Transducer) oder FF (Fieldbus Foundation) arbeiten. In der Phase der Inbetriebnahme wird auch die jeweilige Funktionalität des Feldgeräts, z. B. die Bereitstellung eines Messwerts für einen Druck durch einen Druckmessumformer, im jeweiligen SCADA (Supervisory Control And Data Acquisition)-System, z. B WinCC (Windows Control Center), oder PLS (Prozessleitsystem) z. B. SIMATIC PCS 7, in Betrieb gekommen. Diese Integration der jeweiligen Funktionalität von Feldgeräten in einem Automatisierungsprojekt erfolgt mit großem manuellem Aufwand. Zudem wird bisher die wirkliche Funktionalität erst beim realen Anfahren mit gewissen Fehlerrisiken validiert. In der Prozessautomatisierung besteht beispielsweise bei der Herstellung von Ammoniak große Explosionsgefahr, oder in der Fertigungsautomatisierung kann es z. B. aufgrund von Fertigungsfehlern zum Ausfall zuvor bei einer realen Inbetriebnahme einer automatisierungstechnischen Anlage gefertigter Automobile kommen. Um diese Gefahren zu umgehen, wird zunehmend eine virtuelle Inbetriebnahme gewünscht, für welche Simulationsmodelle der Anlagenprozesse und der Komponenten der automatisierungstechnischen Ausrüstung vorhanden sein müssen. Zwar unterstützen bereits verschiedene Engineeringwerkzeuge, z. B. SIMATIC PDM (Process Device Manager), die Inbetriebnahme eines Automatisierungsnetzwerks, in welchem Feldgeräte zur Datenkommunikation miteinander verbunden sind, dennoch ist das Problem der Inbetriebnahme der Feldgeräte unter realen Prozessbedingungen grundsätzlich noch nicht gelöst. Es gibt zwar bereits verschiedene Ansätze, das Prozess- und Geräteverhalten zu simulieren, diese basieren jedoch lediglich auf der Erstellung von Teilmodellen, welche nur Ausschnitte der Realität widerspiegeln können. Anwender der Engineeringwerkzeuge erstellen in der Regel Modelle in der Güte und Genauigkeit, in welcher sie für ihre jeweilige Anwendung benötigt werden, und decken zudem nur die Funktionen ab, die für ihre jeweilige Simulation erforderlich sind.

Ein Verfahren zur Simulation eines Feldgeräts in einem industriellen Automatisierungsnetzwerk ist bereits aus der DE 102 45 176 A1 bekannt. Durch die Simulation soll dort sichergestellt werden, dass die für ein spezielles Feldgerät vorgesehenen Funktionsblöcke auch in dieses Feldgerät geladen werden können und in diesem einwandfrei ablaufen. Ein virtuelles Feldgerät ist untergliedert in ein Speichermanagement, ein Prozessormanagement und eine Kommunikationsschnittstelle. Somit werden insbesondere die Prozessorleistung und der Speicherplatz des Feldgeräts in die Simulation einbezogen um zu gewährleisten, dass beim Laden einer Kontrollstrategie auf die realen Feldgeräte der jeweilige Speicherplatz und die jeweilige Prozessorleistung des realen Geräts ausreichen, um die Kontrollstrategie durchführen zu können.

EDDL (Electronic Device Description Language) und FDT/DTM (Field Device Tool / Device Type Manager) sind seit geraumer Zeit zwei grundsätzliche Methoden zur Integration von Feldgeräten. In einem FDI (Field Device Integration)-Konzept, welches in dem Aufsatz "FDI Device Integration - Best of both Worlds" von Hans-Georg Kumpfmüller und Roland Lange, veröffentlicht in atp edition, 6/2010, Seiten 16-19, beschrieben ist, sollen die Vorteile der beiden genannten Methoden in einer Lösung vereint werden. Das FDI Basiskonzept definiert die Komponenten FDI Package, FDI Server und FDI Client. FDI Packages werden vom Gerätehersteller geliefert und enthalten alle Informationen, die für eine Geräteintegration notwendig sind. Die Device Definition umfasst Verwaltungsinformationen sowie das Gerätemodell. Die Konsistenzsicherung dieses Gerätemodells sowie die Kommunikationslogik zum Gerät erfolgt über die Business Logic. Die Beschreibung der Präsentation der Geräteparameter und Gerätefunktionen ist Aufgabe der User Interface Description. Diese Bestandteile des FDI Packages werden mit EDDL beschrieben. Zusätzlich können Anteile der Bedienoberfläche auch als programmierte Komponenten, sogenannte User Interface Plug-ins (UIPs), integriert werden, deren Basiskonzept dem FDT/DTM-Konzept entspricht. FDI Server importieren FDI Device Packages. Die Device Definition und Business Logic des FDI Packages werden über einen EDD Interpreter ausgeführt. Die programmierten User Interface Plug-ins werden vom Server nur verwaltet, aber nicht ausgeführt. Sie werden auf Anfrage von Clients zu diesen transferiert. FDI Clients realisieren die Schnittstelle zum Anwender. Das Client-Server-Konzept erlaubt dabei sowohl die Verteilung der Clients auf verschiedene Rechner als auch den koordinierten und autorisierten Zugriff mehrerer Clients auf das gemeinsame Informationsmodell.

Weitere FDI Konzepte sind aus RUNDE STEFAN ET AL: "EDDL and semantic web - From field device integration (FDI) to Future Device Management (", 2013 IEEE 18TH CONFERENCE ON EMERGING TECHNOLOGIES & FACTORY AUTOMATION (ETFA), IEEE, 10. September 2013 (2013-09-10), Seiten 1-8, XP032516963, ISSN: 1946-0740, DOI: 10.1109/ETFA.2013.6647962 [gefunden am 2013-10-24] und "Mit PACTware effizient konfigurieren", , 1. November 2009 (2009-11-01), XP055179588, Gefunden im Internet: URL:http://industrial.softing.com/uploads/softing_downloads/P ACTware.pdf [gefunden am 2015-03-26] bekannt.

Der Erfindung liegt die Aufgabe zugrunde, ein Verfahren zur Inbetriebnahme eines industriellen Automatisierungsnetzwerks zu schaffen, mit welchem der Aufwand für die Inbetriebnahme sowie das Risiko von Fehlern in der sich anschließenden Betriebsphase einer industriellen Anlage reduziert werden.

Zur Lösung dieser Aufgabe weist das neue Verfahren zur Inbetriebnahme eines industriellen Automatisierungsnetzwerks die in Anspruch 1 angegebenen Merkmale auf. In den abhängigen Ansprüchen sind vorteilhafte Weiterbildungen der Erfindung beschrieben.

Die Erfindung hat den Vorteil, dass aufgrund der Bereitstellung eines Simulationsmodells für das Verhalten eines Feldgeräts in einer Erweiterung des User Interface Plug-in des FDI Packages für ein Software-Werkzeug, welches zur Inbetriebnahme eines industriellen Automatisierungsnetzwerks durch einen Anwender dient, in besonders einfacher Weise ein Zugriff auf das Simulationsmodell ermöglicht wird. Das Simulationsmodell wird durch den Hersteller des Feldgeräts erstellt und ist somit - wie aufgrund seiner Erstellung durch den Hersteller erwartet werden kann - von besonders hoher Qualität und Zuverlässigkeit. Durch diese Erweiterung des User Interface Plug-in wird nun auch bei der Integration von Feldgeräten deren virtuelle Inbetriebnahme unterstützt. Aufgrund der Komplexität heutiger Feldgeräte ist eine virtuelle Inbetriebnahme eine sinnvolle und notwendige Vorgehensweise, bevor reale, in eine industrielle Anlage integrierte Feldgeräte bei der sich an die Inbetriebnahme anschließenden Produktion in der Betriebsphase zum Einsatz kommen. Oftmals müssen an Feldgeräten mehrere hundert Parameter eingestellt werden, bevor die Feldgeräte im Sinne der jeweiligen Automatisierungslösung korrekt arbeiten. Um Fehlparametrierungen und deren Folgen zu minimieren ist es daher von großem Vorteil, wenn Feldgeräte jeweils anhand eines korrekten, vom Hersteller bereitgestellten Simulationsmodells virtuell in Betrieb genommen werden, wobei das Simulationsmodell vorteilhaft in dem jeweiligen FDI Package des Feldgeräts als Erweiterung des User Interface Plug-in bereitgestellt wird.

Ein weiterer Vorteil ist die Plattformunabhängigkeit eines als Erweiterung eines User Interface Plug-in realisierten Simulationsmodells. Für die Realisierung der User Interface Plug-ins wird nämlich die Microsoft-.net-Technologie verwendet. Diese Technologie ist auf allen aktuellen PC-basierten Windows-Versionen vorhanden. Sie nutzt eine Zwischensprache, sodass eine einmal erstellte und in die Zwischensprache übersetzte .net-Komponente auf allen Windows-Versionen lauffähig ist. Die Abstraktion zum Betriebssystem wird über die .net-Laufzeitumgebung des Software-Werkzeugs, welches auf das Simulationsmodell zugreift, sichergestellt. Zudem spezifiziert FDI in vorteilhafter Weise die Nützung von Varianten der User Interface Plug-ins. Die verschiedenen Varianten können sich dabei sowohl in dem unterstützten Betriebssystem als auch in der unterstützten Client-Umgebung unterscheiden. Daher kann es eine Variante eines Simulationsmodells für die Nutzung durch ein Software-Werkzeug auf einem Personal Computer (PC), eine andere für die Nutzung in einem auf einem Handheld ablaufenden Software-Werkzeug geben. Mehrere Varianten eines User Interface Plug-in können in einem FDI Package geliefert werden. Das Software-Werkzeug greift als FDI Client nur auf die Variante des Simulationsmodells zu, die für seine Ablaufumgebung am besten geeignet ist. Bei eventuellen Modifikationen von Simulationsmodellen durch das Software-Werkzeug wird zudem in vorteilhafter Weise die Konsistenz des jeweiligen Simulationsmodells durch die im FDI Server verfügbare Business Logic sichergestellt. Wenn nur zertifizierte FDI Packages und damit zertifizierte Simulationsmodelle zugelassen werden, kann die Qualität der Simulation bei der Inbetriebnahme weiter verbessert werden.

Gemäß der Erfindung ist die Erweiterung des User Interface Plug-in derart ausgebildet, dass einem Software-Werkzeug, welches zur Inbetriebnahme des Automatisierungsnetzwerks eingesetzt wird, neben dem Simulationsmodell für das Verhalten eines Feldgeräts zusätzlich ein Zugriff auf ein Simulationsmodell für einen Prozess oder einen Teilprozess ermöglicht wird. Die damit erhältliche Stimulation für das simulierte Verhalten des Feldgeräts trägt in vorteilhafter Weise zu einer realitätsnäheren Simulation der industriellen Anlage bei.

Dabei kann das Simulationsmodell für den Prozess vorgefertigte Stimulationsmuster enthalten, welche im jeweiligen User Interface Plug-in selbst als Erweiterung vorhanden sind. Daraus kann in vorteilhafter Weise ein zur jeweiligen Anwendung passendes Muster ausgewählt werden, z. B. ein sinusförmiger oder rampenförmiger Verlauf eines Drucks bei einem Druckmessumformer als Feldgerät.

Alternativ oder zusätzlich zu den genannten Stimulationsmustern kann ein Zugriff auch auf ein Simulationsmodell für den Prozess oder für einen Teilprozess durch eine Co-Simulationskopplung ermöglicht werden, durch welche ein Prozessmodell, welches nicht in dem User Interface Plug-in hinterlegt ist, an das Modell für das Feldgeräteverhalten angebunden wird. In vorteilhafter Weise können dadurch auch umfangreichere Prozessmodelle zur Stimulation für das simulierte Feldgeräteverhalten genutzt werden. Beispielsweise liegen bereits für das Simulationswerkzeug SIMIT der Siemens AG, welches zur virtuellen Inbetriebnahme von industriellen Anlagen genutzt wird, umfangreiche Simulationsmodelle für Prozesse vor, welche die Simulationsmöglichkeiten deutlich erweitern können.

Besonders vorteilhaft ist eine Ausgestaltung der Erfindung, bei welcher das um Simulationsmodelle erweiterte FDI Package bereits zum Lieferumfang der Hersteller von Feldgeräten gehört. Dabei ist es vorzugsweise in einem Speicher des Feldgeräts elektronisch auslesbar hinterlegt und/oder wird in einer gesondert transportierten Datei ausgeliefert, z. B. durch autorisiertes Herunterladen von einem Server beim Hersteller. Anhand der Zeichnungen, in denen Ausführungsbeispiele der Erfindung dargestellt sind, werden im Folgenden die Erfindung sowie Ausgestaltungen und Vorteile näher erläutert.

Es zeigen:
- Figur 1: ein Blockschaltbild einer industriellen Anlage,
- Figur 2: einen Aufbau eines FDI Packages und
- Figur 3: ein UML (Unified Modelling Language) Klassendiagramm eines FDI Packages.

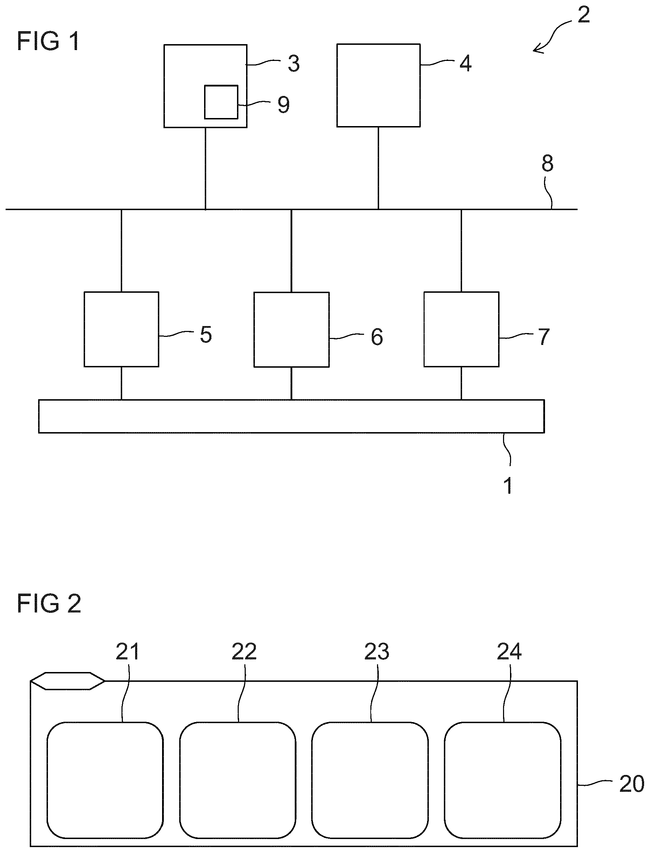

In Figur 1 ist eine automatisierungstechnische Anlage dargestellt, in welcher ein Prozess 1 mittels eines Automatisierungsnetzwerks 2 gesteuert wird. In dem Automatisierungsnetzwerk 2 sind eine Engineering Station 3, ein FDI Server 4 und Feldgeräte 5, 6 und 7 zur Datenkommunikation durch ein Ethernet-basiertes Kommunikationsnetz 8 miteinander verbunden. Da das FDI Konzept busneutral ist, kann es sich bei dem Datenkommunikationsnetz 8 um ein beliebiges handeln, z. B. mit PROFIBUS, PROFINET, HART oder FF Protocol. Die Feldgeräte 5, 6 und 7 sind prozessnahe Komponenten wie beispielsweise eine speicherprogrammierbare Steuerung, die häufig als Controller bezeichnet wird, ein Messumformer zur Erfassung einer physikalischen Variable im zu automatisierenden Prozess 1, z. B. eines Drucks, bzw. ein Stellglied zur Beeinflussung des Prozesses 1 in Abhängigkeit der erfassten physikalischen Variable, z. B. ein Regelventil. Durch das Software-Werkzeug 9 wird bei der Inbetriebnahme eine Konfiguration und Parametrierung der im Automatisierungsnetzwerk befindlichen Feldgeräte durchgeführt. Für die Feldgeräte 5, 6 und 7 sind auf dem FDI Server 4 jeweils FDI Packages hinterlegt, auf deren Informationsinhalt ein Software-Werkzeug 9, welches auf der Engineering Station 3 abläuft, als FDI Client zugreifen kann. In den FDI Packages sind, wie später noch näher erläutert wird, Modelle für das Verhalten der Feldgeräte 5, 6 und 7 sowie Modelle für Teilaspekte des Prozesses für das Software-Werkzeug 9 zugänglich hinterlegt. Um das Risiko eventuell in der Betriebsphase der prozesstechnischen Anlage auftretender Fehler möglichst gering zu halten, wird durch das Software-Werkzeug 9 in einer der Betriebsphase vorhergehenden Inbetriebnahmephase eine Simulation anhand dieser Modelle durchgeführt. Die Inbetriebnahme erfolgt somit virtuell und ohne einen real ablaufenden Prozess 1.

In Figur 1 ist das Software-Werkzeug 9 zur besseren Anschaulichkeit als ein Block auf einer Engineering Station 3 gezeichnet. Das ist nicht so zu verstehen, dass das Software-Werkzeug 9 nur auf einer Recheneinheit ablaufen kann. Selbstverständlich kann das Software-Werkzeug 9 bei einer Realisierung in verschiedene Teilaufgaben untergliedert werden, welche dann auf verschiedenen Recheneinheiten, auch Stations genannt, ablaufen können.

Ein FDI Package 20 gemäß Figur 2 enthält in bekannter Weise eine Device Definition 21, eine User Interface Description 22 und eine Business Logic 23, die dem FDI Konzept entsprechen. Im User Interface Plug-in 24 ist ein durch den Hersteller des jeweiligen Feldgeräts erstelltes Simulationsmodell für das Verhalten des Feldgeräts abgelegt. Das Modell kann durch den Anwender nicht verändert werden und sollte daher korrekt sein. Zusätzlich werden im User Interface Plug-in 24 verschiedene Modelle zur Prozesssimulation bereitgestellt, durch welche eine Stimulation für das Verhaltensmodell des Feldgeräts erzeugt werden kann.

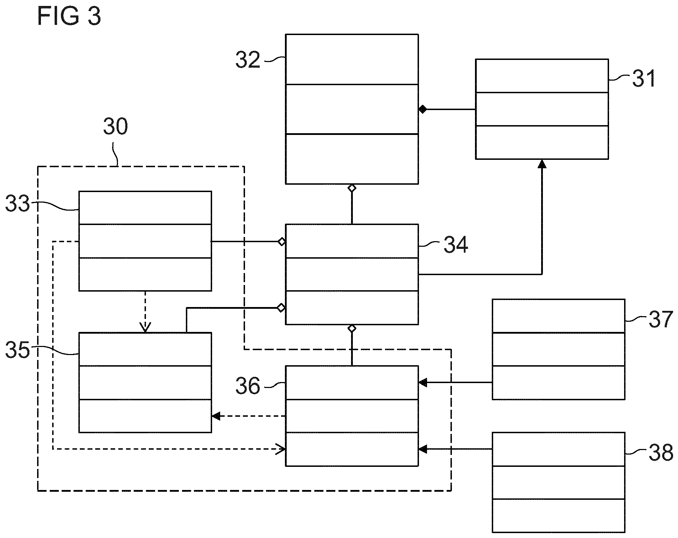

Figur 3 zeigt ein UML Klassendiagramm zur Verdeutlichung einer Erweiterung 20 eines herkömmlichen User Interface Plug-in 31, welche einen Bestandteil eines herkömmlichen FDI Package 32 bildet. Ein um ein Feldgeräte-Verhaltensmodell 33 erweitertes User Interface Plug-in 34 erbt hierbei alle wesentlichen Eigenschaften und Methoden des herkömmlichen User Interface Plug-in 31 da im gezeigten Ausführungsbeispiel die Bedienoberfläche des Feldgeräts bei einer virtuellen Inbetriebnahme dasselbe Erscheinungsbild besitzen soll wie bei einer herkömmlichen Inbetriebnahme. Das Modell 33, welches im User Interface Plug-in 34 des FDI Package 32 hinterlegt ist, dient der Simulation des Feldgeräteverhaltens bei der Inbetriebnahme eines Automatisierungsnetzwerks. Zur Erzeugung einer Stimulation bei der Simulation des Feldgeräteverhaltens steht zum einen ein simulierbares Prozessmodell 35 zur Verfügung, welches ebenfalls in der Erweiterung 30 des User Interface Plug-in 34 vorgesehen ist, zum anderen eine Co-Simulationskopplung 36, welche die Anbindung eines externen Prozessmodells oder eines externen Simulators ermöglicht. Die Co-Simulationskopplung 36 kann beispielsweise über eine OPC-Kopplung 37 oder über einen Shared Memory 38 einen externen Simulator für eine Prozesssimulation anbinden. Dadurch ist es möglich, weitere und u. U. sehr umfangreiche Prozessmodelle in die Simulation einzubeziehen. Seitens des Feldgeräte-Verhaltensmodells 33 besitzen das Prozessmodell 35 und die Co-Simulationskopplung 36 dieselbe Schnittstelle.

Im Folgenden werden noch einmal kurz die Vorteile, welche durch die Erfindung erzielt werden, zusammengefasst:
- Vorabtest der verbauten automatisierungstechnischen Komponenten, hier Feldgeräte genannt, unter realen Bedingungen möglich,
- Minimierung von kritischen Zuständen bei der realen Inbetriebnahme einer industriellen Anlage,
- Modelle zur Simulation des Geräteverhaltens kommen vom Hersteller und sollten somit korrekt sein,
- Prozessmodelle sind an PLS- und SCADA-Funktionen ankoppelbar,
- Keine Änderung des PLS oder SCADA notwendig, daher einfache Umsetzung in bestehenden Engineeringsystemen und
- Durchgängiger Einsatz von Feldgerätemodellen in der Inbetriebnahme.

## Patentansprüche

1. Verfahren zur Inbetriebnahme eines industriellen Automatisierungsnetzwerks (2) mit mehreren Feldgeräten (5, 6, 7), die durch ein Netzwerk (8) zur Datenkommunikation miteinander verbunden sind, wobei durch ein Software-Werkzeug (9) eine Konfiguration und Parametrierung der im Automatisierungsnetzwerk (2) befindlichen Feldgeräte (5, 6, 7) durchgeführt wird, wobei ein FDI Package (20, 32) bereitgestellt wird, dessen User Interface Plug-in (24, 34) eine Erweiterung (30) aufweist, durch welche dem Software-Werkzeug (9) ein Zugriff auf ein Simulationsmodell (30) für das Verhalten mindestens eines Feldgeräts (5, 6, 7) und zusätzlich ein Zugriff auf ein Simulationsmodell (35) für einen Prozess (1) ermöglicht werden, und
wobei das mindestens eine Feldgerät (5, 6, 7) durch das Software-Werkzeug (9) virtuell in Betrieb genommen wird, wobei das Verhalten des Feldgeräts (5, 6, 7) mittels des Simulationsmodells (33) nachgebildet wird.

2. Verfahren nach Anspruch 1, **dadurch gekennzeichnet, dass** das Simulationsmodell (35) für den Prozess (1) vorgefertigte Stimulationsmuster enthält und im User Interface Plug-in (34) hinterlegt ist.

3. Verfahren nach Anspruch 1 oder 2, **dadurch gekennzeichnet, dass** der Zugriff auf das Simulationsmodell für den Prozess (1) durch eine Co-Simulationskopplung (36) ermöglicht wird, durch welche ein Prozessmodell, welches nicht in dem User Interface Plug-in (34) hinterlegt ist, an das Modell (33) für das Feldgeräteverhalten angebunden wird.

## Claims

1. Method for starting up an industrial automation network (2) with a number of field devices (5, 6, 7), which are connected to one another by a network (8) for data communication, wherein a configuration and parameterisation of the field devices (5, 6, 7) located in the automation network (2) is carried out by a software tool (9),
wherein an FDI package (20, 32) is provided, of which the user interface plug-in (24, 34) has an extension (30) though which access to a simulation model (30) for the behaviour of at least one field device (5, 6, 7) and additionally access to a simulation model (35) for a process (1) is made possible for the software tool (9), and
wherein the at least one field device (5, 6, 7) is started up virtually by the software tool (9), wherein the behaviour of the field device (5, 6, 7) is simulated by means of the simulation model (33).

2. Method according to claim 1, **characterised in that** the simulation model (35) for a process (1) contains prefabricated stimulation patterns and is stored in the user interface plug-in (34).

3. Method according to claim 1 or 2, **characterised in that** access to the simulation model (35) for the process (1) is made possible by a co-simulation coupling (36), through which a process model that is not stored in the user interface plug-in (34) is linked to the model (33) for the field device behaviour.

## Revendications

1. Procédé de mise en service d'un réseau (2) d'automatisation industriel ayant plusieurs appareils (5, 6, 7) sur site, qui sont reliés entre eux pour la communication de données par un réseau (8), dans lequel on effectue, par un outil (9) logiciel, une configuration et une paramétrisation des appareils (5, 6, 7) sur site se trouvant dans le réseau (2) d'automatisation, dans lequel on prépare un progiciel (20, 32) FDI, dont le module (24, 34) d'extension d'interface utilisateur a une extension, par laquelle sont rendus possibles à l'outil (9) logiciel un accès à un modèle (30) de simulation du comportement d'au moins un appareil (5, 6, 7) sur site et en outre un accès à un modèle (35) de simulation d'un processus (1) et
dans lequel on prend le au moins un appareil (5, 6, 7) sur site en service virtuellement par l'outil (9) logiciel, le comportement de l'appareil (5, 6, 7) sur site étant reproduit au moyen du modèle (33) de simulation.

2. Procédé suivant la revendication 1, **caractérisé en ce que** le modèle (35) de simulation du processus (1) contient un motif de simulation fabriqué à l'avance et est mémorisé dans l'extension (24) d'interface utilisateur.

3. Procédé suivant la revendication 1 ou 2, **caractérisé en ce qu'**on rend possible l'accès au modèle de simulation du processus (1) par un couplage (36) de co-simulation, par lequel un modèle de processus, qui n'est pas mémorisé dans l'extension (34) d'interface utilisateur, est relié au modèle (33) du comportement des appareils sur site.
